# EUROPEAN PATENT APPLICATION

(11) **EP 4 439 714 A1**
(43) Date of publication of application: **02.10.2024**
(21) Application number: 22965423.1
(22) Date of filing: 14.11.2022
(51) Int. Cl.: H01M 4/36

(54) **SILICON-CARBON COMPOSITE MATERIAL, PREPARATION METHOD THEREFOR, NEGATIVE ELECTRODE, AND LITHIUM-ION BATTERY**

(71) Applicant: Hefei Gotion High-Tech Power Energy Co., Ltd., Hefei, Anhui 230012 (CN)
(72) Inventor: WANG, Hui, Hefei, Anhui 230012 (CN); WANG, Qingli, Hefei, Anhui 230012 (CN); YANG, Maoping, Hefei, Anhui 230012 (CN); LIN, Shaoxiong, Hefei, Anhui 230012 (CN)
(74) Representative: Barker Brettell LLP
(86) International application number: PCT/CN2022/131760
(87) International publication number: WO 2024/103230

(57) **Abstract**

A silicon-carbon composite material, a preparation method thereof, an anode, and a lithium-ion battery are provided. The silicon-carbon composite material includes a matrix and a coating layer. The matrix is a carbon nanotube doped with titanium and nitrogen and has an outer surface and an inner surface. The coating layer coats the outer surface and the inner surface, and the coating layer includes a silicon oxide layer. In one aspect, the matrix has a multi-layered and large-cavity structure and has high porosity of the carbon nanotube, thereby significantly reducing the polarization of the silicon-carbon composite material. In another aspect, the silicon oxide layer coating the outer surface and the inner surface of the matrix may be anchored by forming chemical bonds such as N-O-Si and Ti-O-Si with nitrogen and titanium doped into the carbon nanotube, thereby improving the cycle stability of the silicon-carbon composite material. The lithium-ion battery prepared using the silicon-carbon composite material has the advantages of high specific discharge capacity, stable cycle performance, and good rate performance.

## Description

### Technical Field

The present disclosure relates to the technical field of lithium-ion batteries, in particular to a silicon-carbon composite material, a preparation method thereof, an anode, and a lithium-ion battery.

### Background

In recent years, with the continuous improvement of energy density and cycle life of a lithium-ion battery, the lithium-ion battery has an irreplaceable position in the field of electrochemical energy storage and power batteries. As the four main materials of the lithium-ion battery, the quality of an anode determines the quality of the lithium-ion battery. At present, lithium-ion anode materials used in the market are mainly divided into a carbon-based material and a non-carbon-based material. The carbon-based anode material has problems such as low specific capacity, which leads to low diffusion systems and general rate performance of the lithium-ion battery. Therefore, the non-carbon-based material has received more and more attention, especially a silicon-based anode material. However, the lithium-ion battery made of the silicon-based anode material will have a huge volume effect during charging and discharging, which will lead to the structural collapse of the lithium-ion battery and will in turn reduce the rate performance and conductivity of the lithium-ion battery. Therefore, it is necessary to propose a method that can solve these problems and widely apply the silicon-based anode material to the lithium-ion battery.

### Summary

A main object of the present disclosure is to provide a silicon-carbon composite material, a preparation method thereof, an anode, and a lithium-ion battery, so as to solve the problems of poor rate performance and cycle stability of a silicon-based anode material in the related art.

In order to achieve the above object, a silicon-carbon composite material is provided according to one aspect of the present disclosure. The silicon-carbon composite material includes a matrix and a coating layer. The matrix is a carbon nanotube doped with titanium and nitrogen and has an outer surface and an inner surface. The coating layer coats the outer surface and the inner surface, and the coating layer includes a silicon oxide layer.

Further, the coating layer also includes a carbon layer. The silicon oxide layer coats the inner surface and the outer surface of the matrix. The carbon layer coats a surface of the silicon oxide layer away from a tube wall of the carbon nanotube.

Further, the silicon oxide layer is a SiOₓ coating layer, where 0.3≤x≤1.4, preferably 0.6≤x≤1.4. The mass ratio of the matrix, the SiOₓ coating layer and the carbon layer is preferably 2-36:54-95:1-10. The mass ratio of SiOₓ coating the inner surface of the matrix to SiOₓ coating the outer surface of the matrix is preferably 1.2-2:1.

Further, the silicon-carbon composite material contains, by mass percentage, 30-70.5% of silicon, 0.5-2% of titanium, 0.5-2% of nitrogen, and the rest of carbon, silicon and oxygen. Silicon and oxygen exist in the form of SiOₓ. The silicon-carbon composite material preferably has a specific surface area of 20-100 m²·g⁻¹. The silicon-carbon composite material preferably has a total pore volume of 0.2-0.5 mL·g⁻¹. The silicon-carbon composite material preferably has a diameter of 200-500 nm. The silicon-carbon composite material preferably has a length of 100-3000 nm, further preferably 500-3000 nm.

A preparation method of a silicon-carbon composite material is provided according to another aspect of the present disclosure. The preparation method includes the following steps. In S1, a first sintering is performed on a first mixture including a carbon-containing nitrogen source, a titanium source and a transition metal salt in nitrogen or inert gas to obtain a carbon nanotube. In S2, a second mixture including the carbon nanotube and a silicon source is hydrolyzed under alkaline conditions to obtain the silicon-carbon composite material.

Further, the preparation method also includes the following steps. The second mixture is hydrolyzed to obtain an intermediate product. A second sintering is performed on the intermediate product in a carbon-containing reducing atmosphere to obtain the silicon-carbon composite material. The second mixture preferably further includes a surfactant, the mass ratio of the carbon nanotube to the surfactant is preferably 1:1-2, and the surfactant is preferably selected from any one or more of hexadecyltrimethyl ammonium bromide, sodium dodecylbenzene sulfonate and sodium stearate. The hydrolysis reaction preferably has a pH value of 9-12, and the time of the hydrolysis reaction is preferably 2-4 h. The molar ratio of the silicon source to the carbon-containing nitrogen source is preferably 1-2:1, preferably, 1.5-2:1, the silicon source is preferably selected from any one or more of tetraethyl orthosilicate, methyl orthosilicate and methyl ethyl orthosilicate. The temperature of the second sintering is preferably 1000-1300 °C, and the time of the second sintering is preferably 1-3 h. The carbon-containing reducing atmosphere preferably includes a carbon-containing gas and a reducing gas. The carbon-containing gas is methane, and the reducing gas is preferably selected from any one or more of carbon monoxide, hydrogen sulfide and sulfur dioxide. The volume ratio of the reducing gas in the carbon-containing reducing atmosphere is preferably 7-15%, the carbon-containing reducing atmosphere preferably further includes nitrogen or inert gas, and the volume ratio of the reducing gas, the carbon-containing gas and the nitrogen gas is preferably 1:1-3:5-8.

Further, the second sintering is performed in a rotary kiln, and the rotary kiln preferably has a revolving speed of 0.1-1 r/min.

Further, in S1, the mass ratio of the carbon-containing nitrogen source to the titanium source is 1-3:1, the nitrogen source is preferably selected from any one or more of melamine, diazomethane and diazoethyl acetate, the titanium source is preferably selected from any one or more of tetrabutyl titanate, tetraethyl titanate and tetraisopropyl titanate. The molar ratio of metal in the transition metal salt to the carbon-containing nitrogen source is 1:0.3-1, the metal in the transition metal salt is preferably selected from any one or more of cobalt, iron and nickel, and an anion of the transition metal salt is preferably selected from acetate and/or halogen ions. The temperature of the first sintering is preferably 400-900 °C, the time of the first sintering is preferably 4-12 h, and the first sintering is preferably a gradient sintering. The gradient sintering process includes: performing a first gradient sintering on the first mixture to obtain a first gradient sintering product; and performing a second gradient sintering on the first gradient sintering product to obtain the carbon nanotube. The temperature of the first gradient sintering is preferably 400 to 600 °C, and the time of the first gradient sintering is preferably 2-6 h. The temperature of the second gradient sintering is preferably 700 to 900 °C, and the time of the second gradient sintering is preferably 2-6 h. The inert gas is selected from any one or more of helium, neon, argon and krypton.

An anode is provided according to yet another aspect of the present disclosure. The anode includes an anode material. The anode material includes the aforementioned silicon-carbon composite material.

A lithium-ion battery is provided according to yet another aspect of the present disclosure. The lithium-ion battery includes a cathode and an anode. The anode is the aforementioned anode.

With the technical solution of the present disclosure, in one aspect, the matrix of the present disclosure has a multi-layered and large-cavity structure and has high porosity of the carbon nanotube, thereby contributing to the doping modification of titanium and nitrogen therein. After the joint doping of titanium and nitrogen, electrical properties such as conductivity are greatly improved, thereby significantly reducing the polarization of the silicon-carbon composite material. In another aspect, the silicon oxide layer coating the outer surface and the inner surface of the matrix may be anchored by forming chemical bonds such as N-O-Si and Ti-O-Si with nitrogen and titanium doped into the carbon nanotube, thereby further stabilizing the structure of the silicon-carbon composite material, alleviating the volume expansion of a silicon oxide material, and improving the cycle stability of the silicon-carbon composite material. The carbon nanotube in the silicon-carbon composite material can not only effectively maintain the structural stability thereof during the process of intercalation and de-intercalation of lithium ions, but also provide lithium-ion transport channels and electrolyte solution storage space. Furthermore, a lithium silicate phase formed by silicon oxide during charging and discharging can reduce the volume expansion of the material, and can also effectively control the capacity, initial effect and cycle performance of the material. The lithium-ion battery prepared using the silicon-carbon composite material provided by the present disclosure has the advantages of high specific discharge capacity, stable cycle performance, good rate performance, and the like.

### Brief Description of the Drawings

The accompanying drawings, constituting a part of the present disclosure, serve to provide a further understanding of the present disclosure. Exemplary embodiments of the present disclosure and the descriptions thereof serve to explain the present disclosure and are not to be construed as unduly limiting the present disclosure. In the drawings:
Fig. 1 shows an SEM diagram of a silicon-carbon composite material according to Embodiment 1 of the present disclosure;
Fig. 2 shows a Raman spectrogram of a silicon-carbon composite material according to Embodiment 1 of the present disclosure;
Fig. 3 shows an initial charge-discharge curve diagram of the button battery of a silicon-carbon composite material according to Embodiment 1 and Embodiment 2 of the present disclosure;
Fig. 4 shows a cycle performance diagram of a silicon-carbon composite material according to Embodiment 1 and Embodiment 2 of the present disclosure under 0.1 C; and
Fig. 5 shows a rate performance diagram of a silicon-carbon composite material according to Embodiment 1 and Embodiment 2 of the present disclosure and commercial SiO.

### Detailed Description of the Embodiments

It is to be noted that the embodiments of the present disclosure and the features of the embodiments may be combined with each other without conflict. The present disclosure will be described in detail below with reference to the accompanying drawings and in conjunction with embodiments.

As analyzed in the Background of the present disclosure, a silicon-based anode material in the related art has the problems of poor rate performance and cycle stability. In order to solve the problems, the present disclosure provides a silicon-carbon composite material, a preparation method thereof, an anode, and a lithium-ion battery.

In a typical embodiment of the present disclosure, a silicon-carbon composite material is provided. The silicon-carbon composite material includes a matrix and a coating layer. The matrix is a carbon nanotube doped with titanium and nitrogen and has an outer surface and an inner surface. The coating layer coats the outer surface and the inner surface, and the coating layer includes a silicon oxide layer.

In one aspect, the matrix of the present disclosure has a multi-layered and large-cavity structure and has high porosity of the carbon nanotube, thereby contributing to the doping modification of titanium and nitrogen therein. After the joint doping of titanium and nitrogen, electrical properties such as conductivity are greatly improved, thereby significantly reducing the polarization of the silicon-carbon composite material. In another aspect, the silicon oxide layer coating the outer surface and the inner surface of the matrix may be anchored by forming chemical bonds such as N-O-Si and Ti-O-Si with nitrogen and titanium doped into the carbon nanotube, thereby further stabilizing the structure of the silicon-carbon composite material, alleviating the volume expansion of a silicon oxide material, and improving the cycle stability of the silicon-carbon composite material. The carbon nanotube in the silicon-carbon composite material can not only effectively maintain the structural stability thereof during the process of intercalation and de-intercalation of lithium ions, but also provide lithium-ion transport channels and electrolyte solution storage space. Furthermore, a lithium silicate phase formed by silicon oxide during charging and discharging can reduce the volume expansion of the material, and can also effectively control the capacity, initial effect and cycle performance of the material. The lithium-ion battery prepared using the silicon-carbon composite material provided by the present disclosure has the advantages of high specific discharge capacity, stable cycle performance, good rate performance, and the like.

In an embodiment of the present disclosure, the coating layer also includes a carbon layer. The silicon oxide layer coats the inner surface and the outer surface of the matrix. The carbon layer coats a surface of the silicon oxide layer away from a tube wall of the carbon nanotube.

The silicon-carbon composite material has a five-layer structure of carbon-silicon-carbon nanotube-silicon-carbon. Specifically, in the silicon-carbon composite material, the matrix is a carbon nanotube doped with titanium and nitrogen, inner and outer surfaces of the carbon nanotube are respectively coated with a silicon oxide layer, and a surface of the silicon oxide layer is uniformly coated with a carbon layer. The carbon nanotube located in the intermediate layer serves as a carrier and a conductive network. The structural stability of the carbon nanotube can be effectively maintained during the process of intercalation and de-intercalation of lithium ions, and lithium-ion transport channels and electrolyte solution storage space can also be provided. During charging and discharging, due to the buffer effect of an inner cavity of the carbon nanotube on the volume expansion of silicon oxide, silicon oxide coating the inner surface of the carbon nanotube is relatively stable. Silicon oxide coating the outer surface of the carbon nanotube may form N-O-Si, Ti-O-Si and other chemical bonds with the doped nitrogen and titanium in the carbon nanotube for anchoring, thereby further stabilizing the material structure. The carbon layer coating the silicon oxide layer can not only further buffer the volume expansion of the silicon oxide layer, thereby improving the electrical properties such as the cycle stability of the material, but also further improve the conductivity of the silicon-carbon composite material, thereby blocking the direct contact between an electrolyte solution and the silicon oxide layer and reducing the probability of side reactions.

In an embodiment of the present disclosure, the silicon oxide layer is a SiOₓ coating layer, where 0.3≤x≤1.4, preferably 0.6≤x≤1.4. The mass ratio of the matrix, the SiOₓ coating layer and the carbon layer is preferably 2-36:54-95:1-10. The mass of SiOₓ coating the inner surface of the matrix is preferably 35-65% of the total mass of the silicon-carbon composite material. The mass ratio of SiOₓ coating the outer surface of the matrix to SiOₓ coating the outer surface of the matrix is preferably 1.2-2:1.

The preferred mass ratio of the carbon nanotube, the silicon oxide layer and the carbon layer and the preferred mass ratio of SiOₓ coating the outer surface of the matrix to SiOₓ coating the outer surface of the matrix are more conducive to exerting the structural advantages of the carbon nanotube. Meanwhile, the effects of the carbon nanotube, the silicon oxide layer and the carbon layer are coordinated as much as possible, so that the structure of carbon-silicon-carbon nanotube-silicon-carbon is more stable.

In an embodiment of the present disclosure, the silicon-carbon composite material contains, by mass percentage, 30-70.5% of silicon, 0.5-2% of titanium, 0.5-2% of nitrogen, and the rest of carbon, silicon and oxygen. Silicon and oxygen exist in the form of SiOₓ. The silicon-carbon composite material preferably has a specific surface area of 20-100 m²·g⁻¹. The silicon-carbon composite material preferably has a total pore volume of 0.2-0.5 mL·g⁻¹. The silicon-carbon composite material preferably has a diameter of 200-500 nm. The silicon-carbon composite material preferably has a length of 100-3000 nm, further preferably 500-3000 nm.

The above content of the elements in the silicon-carbon composite material is beneficial to coordinate the elements to obtain the silicon-carbon composite material with excellent comprehensive properties. As the specific surface area and porosity of the silicon-carbon composite material are higher, there are more active deposition sites, and it is more conducive to the in-situ deposition of silicon materials and the volume expansion of buffer materials, thereby improving the cycle stability of the silicon-carbon composite material.

The diameter of the carbon nanotube determines the size of the inner cavity thereof. Controlling the diameter of the carbon nanotube is conducive to coating a certain amount of SiOₓ on the inner and outer surfaces of the carbon nanotube, so that the structure of the silicon-carbon composite material will not be damaged due to the large or small diameter of the carbon nanotube. Specifically, if the diameter of the carbon nanotube is too small, it is not conducive to the inner cavity of the carbon nanotube to accommodate more silicon dioxide produced by hydrolysis, so that most of silicon dioxide coats the outer surface of the carbon nanotube. Then, a large amount of SiOₓ produced by reduction easily coats the outer surface of the carbon nanotube. Further, when the volume of the silicon material expands and shrinks during charging and discharging, SiOₓ is easy to peel off from the surface of the carbon nanotube, resulting in the structural collapse of the silicon-carbon composite material. If the diameter or length of the carbon nanotube is too large, the inner cavity of the carbon nanotube may easily accommodate too much silicon dioxide, and a large amount of SiOₓ formed by the reduction of silicon dioxide during the cycle will destroy the structure of the carbon nanotube due to volume expansion. Therefore, in the present disclosure, the diameter and length of the carbon nanotube are preferably within the above range, so as to be conducive to obtaining a silicon-carbon composite material with stable structure and excellent comprehensive electrical properties.

And when x in SiOₓ is 0.6≤x<1, the gram capacity of the silicon-carbon composite material is higher than that of commercial SiO, and the initial effect is also higher. When x in SiOₓ is 1≤x≤1.4, the expansion degree of the silicon-carbon composite material during charging and discharging is small, and the cycle performance is good. If x is too large (more than 1.4), the gram capacity of the silicon-carbon composite material will be reduced. If x is too small (less than 0.6), the expansion degree of the silicon-carbon composite material during charging and discharging is slightly larger, and the cycle performance is slightly reduced.

In another typical embodiment of the present disclosure, a preparation method of a silicon-carbon composite material is provided. The preparation method includes the following steps. In S1, a first sintering is performed on a first mixture including a carbon-containing nitrogen source, a titanium source and a transition metal salt in nitrogen or inert gas to obtain a carbon nanotube. In S2, a second mixture including the carbon nanotube and a silicon source is hydrolyzed under alkaline conditions to obtain the silicon-carbon composite material.

Nitrogen and titanium are doped in the carbon nanotube in S1, and the silicon source coats the inner and outer surfaces of the carbon nanotube in the form of silicon dioxide in S2. Therefore, during charging and discharging, due to the buffer effect of an inner cavity of the carbon nanotube on the volume expansion of SiOₓ, silicon oxide coating the inner surface of the carbon nanotube is relatively stable. Silicon oxide coating the outer surface of the carbon nanotube may form N-O-Si, Ti-O-Si and other chemical bonds with the doped nitrogen and titanium in the carbon nanotube for anchoring, thereby further stabilizing the structure of the silicon-carbon composite material to obtain a silicon-carbon composite material with excellent properties. Furthermore, the preparation method is simple and easy for industrial production.

In an embodiment of the present disclosure, the preparation method also includes the following steps. The second mixture is hydrolyzed to obtain an intermediate product. A second sintering is performed on the intermediate product in a carbon-containing reducing atmosphere to obtain the silicon-carbon composite material.

The second mixture preferably further includes a surfactant, the mass ratio of the carbon nanotube to the surfactant is preferably 1:1-2, and the surfactant is preferably selected from any one or more of cetyltrimethyl ammonium bromide, sodium dodecylbenzene sulfonate and sodium stearate.

In order to improve the hydrolysis efficiency of silicon dioxide, it is preferable to cool and pickle the carbon nanotube, dissolve the washed carbon nanotube and surfactant in an organic solvent such as ethanol, add a silicon source to continue ultrasonic stirring to form a second mixture, and add the second mixture to an alkali solution at a constant speed for stirring, hydrolysis and washing to obtain an intermediate product. In order to improve the uniformity of the second mixture, it is preferable to dissolve the carbon nanotube and the surfactant in a mixture solution. In some specific embodiment schemes, the mass ratio of the carbon nanotube to the organic solvent used for dissolution may be 1:50-150. The surfactant is preferably more conducive to improving the hydrophilicity and lipophilicity of the silicon source, so that the silicon source coating the surface of the carbon nanotube is more easily controlled. Further, the hydrolysis reaction preferably has a pH value of 9-12, and the time of the hydrolysis reaction is preferably 2-4 h. Specifically, hydrolysis may be performed in an alkali (e.g. concentrated ammonia water), which may be diluted with water and/or the organic solvent before addition.

The molar ratio of the silicon source to the carbon-containing nitrogen source is preferably 1-2:1, preferably, 1.5-2:1. The silicon source is preferably selected from any one or more of tetraethyl orthosilicate, methyl orthosilicate and methyl ethyl orthosilicate. It is beneficial to control the amount of silicon dioxide coating in situ the inner and outer surfaces of the carbon nanotube by controlling the amount of the silicon source added, and then form a three-layer structure of silicon-carbon nanotube-silicon.

The purpose of the second sintering is to provide reaction conditions for the cracking of the carbon-containing gas and the reduction of silicon dioxide in the carbon-containing reducing atmosphere. The dense carbon layer generated by the cracking of the carbon-containing gas at high temperature is coated on the outside of silicon dioxide. Meanwhile, the reducing gas is used to reduce silicon dioxide to SiOₓ (x=0.6-1.4), and finally form a five-layer structure of carbon-silicon-carbon nanotube-silicon-carbon. At high temperature, SiOₓ and the carbon nanotube are anchored by chemical bonds such as N-O-Si and Ti-O-Si. Especially, the outer surface of the carbon nanotube is anchored with SiOₓ by chemical bonds such as N-O-Si and Ti-O-Si. By chemical bond anchoring, the stability of the material during the cycle can be maintained.

If the temperature of the second sintering is too low, it is not conducive to the effective formation of the silicon-carbon composite material, and if the temperature of the second sintering is too high, the equipment requirements are too high, and the cost is reduced accordingly. For this purpose, the temperature of the second sintering is preferably 1000-1300 °C, and the time of the second sintering is preferably 1-3 h.

By controlling the proportion of components in the carbon-containing reducing atmosphere, it is beneficial to control the value of x in SiOₓ, so as to adjust the initial Coulombic efficiency and cycle performance of the silicon-carbon composite material. In some specific embodiments, the carbon-containing reducing atmosphere preferably includes a carbon-containing gas and a reducing gas. The carbon-containing gas is methane, and the reducing gas is preferably selected from any one or more of carbon monoxide, hydrogen sulfide and sulfur dioxide. The volume ratio of the reducing gas in the carbon-containing reducing atmosphere is preferably 7-15%, the carbon-containing reducing atmosphere preferably further includes nitrogen or inert gas, and the volume ratio of the reducing gas, the carbon-containing gas and the nitrogen gas is preferably 1:1-3:5-8. Therefore, the value of x in SiOₓ is precisely controlled by reducing SiO₂, and then the volume expansion of the silicon-carbon composite material is further reduced by using the lithium silicate phase formed by SiOₓ during charging and discharging, thereby improving the cycle performance of the silicon-carbon composite material.

In order to facilitate the formation of a dense carbon layer on the surface of the SiOₓ coating layer, the second sintering is preferably performed in a rotary kiln, and the rotary kiln preferably has a revolving speed of 0.1-1 r/min.

In order to form a titanium and nitrogen doped carbon nanotube with good electrical conductivity, in S1, the mass ratio of the carbon-containing nitrogen source to the titanium source is preferably 1-3:1. The nitrogen source is preferably selected from any one or more of melamine, diazomethane and diazoethyl acetate. The titanium source is preferably selected from any one or more of tetrabutyl titanate, tetraethyl titanate and tetraisopropyl titanate.

A transition metal salt is added as a catalyst and a template for the formation of the carbon nanotube. The carbon nanotube is obtained by controlling a sintering curve, and then the transition metal salt may be removed by acid treatment. The molar ratio of metal in the transition metal salt to the carbon-containing nitrogen source is preferably 1:0.3-1. The metal in the transition metal salt is preferably selected from any one or more of cobalt, iron and nickel. An anion of the transition metal salt is preferably selected from acetate and/or halogen ions. It is more beneficial to control the formation of the carbon nanotube and the diameter of the carbon nanotube. The temperature of the first sintering is preferably 400-900 °C, and the time of the first sintering is preferably 4-12 h. In order to better control the diameter of the generated carbon nanotube, the first sintering is preferably a gradient sintering, and the gradient sintering process includes: performing a first gradient sintering on the first mixture to obtain a first gradient sintering product; and performing a second gradient sintering on the first gradient sintering product to obtain the carbon nanotube. The temperature of the first gradient sintering is preferably 400 to 600 °C, and the time of the first gradient sintering is preferably 2-6 h. The temperature of the second gradient sintering is preferably 700 to 900 °C, and the time of the second gradient sintering is preferably 2-6 h. The inert gas is selected from any one or more of helium, neon, argon and krypton.

In yet another typical embodiment of the present disclosure, an anode is provided. The anode includes an anode material. The anode material includes the aforementioned silicon-carbon composite material.

The anode including the silicon-carbon composite material has the advantages of excellent specific discharge capacity and cycle performance, good rate performance, and the like.

In yet another typical embodiment of the present disclosure, a lithium-ion battery is provided. The lithium-ion battery includes a cathode and an anode. The anode is the aforementioned anode.

The lithium-ion battery including the anode which has high specific capacity, initial effect, cycle stability and rate performance, and especially has a wide application prospect in the fields of high specific energy lithium-ion batteries and rear-end electric vehicles, energy storage base stations and portable devices. In some specific embodiment schemes, the lithium-ion battery prepared using the silicon-carbon composite material has high initial discharge capacity, initial charge capacity, initial Coulombic efficiency and cycle capacity retention rate.

The beneficial effects of the present disclosure will be further explained below in conjunction with embodiments.

### Embodiment 1

Melamine (50 g) and tetrabutyl titanate were mixed at the mass ratio of 2:1, and then ferric chloride with a molar weight of iron 3 times that of melamine was added and mixed for 1 h to obtain a first mixture (pink powder) that was uniformly mixed. The first mixture was transferred to a tubular electric furnace for a first sintering, the temperature was raised to 500 °C at a rate of 2 °C/min in an argon atmosphere and preserved for 2 h, and then the temperature was raised to 700 °C at a rate of 2 °C/min and preserved for 2 h. The first sintering was completed to obtain a carbon nanotube.

The carbon nanotube was soaked and washed in 150 mL of 10% hydrochloric acid solution for 24 h, filtered with a microporous filter membrane and washed with deionized water to neutral, and dried at 80 °C for 15 h. After drying, a black carbon nanotube was obtained. The carbon nanotube, cetyltrimethylammonium bromide and absolute ethanol were mixed according to the mass ratio of 1:1:50 and ultrasonically stirred for 6 h to obtain solution A. Tetraethyl orthosilicate (1.5 times that of the molar weight of melamine) was added to solution A and ultrasonically stirred for 6 h continuously to obtain solution B.

Concentrated ammonia (28wt% mass) was mixed with 40 mL of anhydrous ethanol and 60 mL of deionized water according to the volume ratio of tetraethyl orthosilicate to concentrated ammonia water at 1:1 to form solution C. Solution B was added to solution C at a constant speed and stirred continuously, and hydrolyzed for 4 h with a pH value of 9. A hydrolyzed product was centrifuged and washed with absolute ethanol for 3 times to obtain an intermediate product.

The intermediate product was placed in an atmosphere rotary furnace, a mixture of hydrogen sulfide, methane and nitrogen with the volume ratio of 1:1:5 was introduced, the temperature was preserved at 1000 °C for 1 h, and a second sintering was performed to obtain a silicon-carbon composite material.

### Embodiment 2

Melamine and tetrabutyl titanate were mixed at the mass ratio of 3:1, and then ferric chloride with a molar weight of iron 2 times that of melamine was added and mixed for 2 h to obtain a first mixture (pink powder) that was uniformly mixed. The first mixture was transferred to a tubular electric furnace for a first sintering, the temperature was raised to 500 °C at a rate of 2 °C/min in an argon atmosphere and preserved for 2 h, and then the temperature was raised to 800 °C at a rate of 2 °C/min and preserved for 3 h. The first sintering was completed to obtain a carbon nanotube.

The carbon nanotube was soaked and washed in 200 mL of 10% hydrochloric acid solution for 24 h, filtered with a microporous filter membrane and washed with deionized water to neutral, and dried at 80 °C for 15 h. After drying, a black carbon nanotube was obtained.

The carbon nanotube, cetyltrimethylammonium bromide and absolute ethanol were mixed according to the mass ratio of 1:2:100 AM and ultrasonically stirred for 8 h to obtain solution A. Tetraethyl orthosilicate (2 times that of the molar weight of melamine) was added to solution A and ultrasonically stirred for 8 h continuously to obtain solution B.

Concentrated ammonia (27wt% mass) was mixed with 30 mL of anhydrous ethanol and 70 mL of deionized water according to the volume ratio of tetraethyl orthosilicate to concentrated ammonia water at 1:1.5 to form solution C. Solution B was added to solution C at a constant speed and stirred continuously, and hydrolyzed for 4 h with a pH value of 11. A hydrolyzed product was centrifuged and washed with absolute ethanol for 3 times to obtain an intermediate product.

The intermediate product was placed in an atmosphere rotary furnace, a mixture of carbon monoxide, methane and nitrogen with the volume ratio of 1:2:8 was introduced, the temperature was preserved at 1200 °C for 2 h, and a second sintering was performed to obtain a silicon-carbon composite material.

### Embodiment 3

Melamine and tetrabutyl titanate were mixed at the mass ratio of 1:1, and then ferric chloride with a molar weight of iron 3 times that of melamine was added and mixed for 2 h to obtain a first mixture (pink powder) that was uniformly mixed. The first mixture was transferred to a tubular electric furnace for a first sintering, the temperature was raised to 500 °C at a rate of 2 °C/min in an argon atmosphere and preserved for 2 h, and then the temperature was raised to 900 °C at a rate of 2 °C/min and preserved for 4 h. The first sintering was completed to obtain a carbon nanotube.

The carbon nanotube was soaked and washed in 300 mL of 10% hydrochloric acid solution for 24 h, filtered with a microporous filter membrane and washed with deionized water to neutral, and dried at 80 °C for 15 h. After drying, a black carbon nanotube was obtained.

The carbon nanotube, cetyltrimethylammonium bromide and absolute ethanol were mixed according to the mass ratio of 1:2:150 AM and ultrasonically stirred for 12 h to obtain solution A. Tetraethyl orthosilicate (1 times that of the molar weight of melamine) was added to solution A and ultrasonically stirred for 12 h continuously to obtain solution B.

Concentrated ammonia (25wt% mass) was mixed with 50 mL of anhydrous ethanol and 50 mL of deionized water according to the volume ratio of tetraethyl orthosilicate to concentrated ammonia water at 1:2 to form solution C. Solution B was added to solution C at a constant speed and stirred continuously, and hydrolyzed for 4 h with a pH value of 12. A hydrolyzed product was centrifuged and washed with absolute ethanol for 3 times to obtain an intermediate product.

The intermediate product was placed in an atmosphere rotary furnace, a mixture of sulfur dioxide, methane and nitrogen with the volume ratio of 1:3:8 was introduced, the temperature was preserved at 1300 °C for 3 h, and a second sintering was performed to obtain a silicon-carbon composite material.

### Embodiment 4

Melamine and tetrabutyl titanate were mixed at the mass ratio of 3:1, and then ferric chloride with a molar weight of iron 2 times that of melamine was added and mixed for 2 h to obtain a first mixture (pink powder) that was uniformly mixed. The first mixture was transferred to a tubular electric furnace for a first sintering, the temperature was raised to 500°C at a rate of 2 °C/min in an argon atmosphere and preserved for 2 h, and then the temperature was raised to 900 °C at a rate of 2 °C/min and preserved for 3 h, a carbon nanotube was obtained.

The carbon nanotube was soaked and washed in 200 mL of 10% hydrochloric acid solution for 24 h, filtered with a microporous filter membrane and washed with deionized water to neutral, and dried at 80 °C for 15 h. After drying, a black carbon nanotube was obtained.

The carbon nanotube, cetyltrimethylammonium bromide and absolute ethanol were mixed according to the mass ratio of 1:2:100 AM and ultrasonically stirred for 8 h to obtain solution A. Tetraethyl orthosilicate (2 times that of the molar weight of melamine) was added to solution A and ultrasonically stirred for 8 h continuously to obtain solution B.

Concentrated ammonia (26wt% mass) was mixed with 60 mL of anhydrous ethanol and 40 mL of deionized water according to the volume ratio of tetraethyl orthosilicate to concentrated ammonia water at 1:2 to form solution C. Solution B was added to solution C at a constant speed and stirred continuously, and hydrolyzed for 4 h with a pH value of 11.5. A hydrolyzed product was centrifuged and washed with absolute ethanol for 3 times to obtain an intermediate product.

The intermediate product was placed in an atmosphere rotary furnace, a mixture of sulfur dioxide, methane and nitrogen with the volume ratio of 1:2:8 was introduced, the temperature was preserved at 1050 °C for 2 h, and a second sintering was performed to obtain a silicon-carbon composite material.

### Embodiment 5

The difference from Embodiment 1 was that the mass ratio of melamine to tetrabutyl titanate was 1:1, and a silicon-carbon composite material was finally obtained.

### Embodiment 6

The difference from Embodiment 1 was that the mass ratio of melamine to tetrabutyl titanate was 3:1, and a silicon-carbon composite material was finally obtained.

### Embodiment 7

The difference from Embodiment 1 was that the mass ratio of melamine to tetrabutyl titanate was 1:2, and a silicon-carbon composite material was finally obtained.

### Embodiment 8

The difference from Embodiment 1 was that the mass ratio of melamine to tetrabutyl titanate was 4:1, and a silicon-carbon composite material was finally obtained.

### Embodiment 9

The difference from Embodiment 1 was that the molar weight of iron was ferric chloride that was 1 time that of melamine, and a silicon-carbon composite material was finally obtained.

### Embodiment 10

The difference from Embodiment 1 was that the molar weight of iron was ferric chloride that was 1.5 times that of melamine, and a silicon-carbon composite material was finally obtained.

### Embodiment 11

The difference from Embodiment 1 was that the mass ratio of the carbon nanotube to the surfactant was 1:2, and a silicon-carbon composite material was finally obtained.

### Embodiment 12

The difference from Embodiment 1 was that the mass ratio of the carbon nanotube to the surfactant was 2:1, and a silicon-carbon composite material was finally obtained.

### Embodiment 13

The difference from Embodiment 1 was that tetraethyl orthosilicate (2 times that of the molar weight of melamine) was added to solution A, and a silicon-carbon composite material was finally obtained.

### Embodiment 14

The difference from Embodiment 1 was that tetraethyl orthosilicate (1 time that of the molar weight of melamine) was added to solution A, and a silicon-carbon composite material was finally obtained.

### Embodiment 15

The difference from Embodiment 1 was that the temperature of the second sintering was 1300 °C, and a silicon-carbon composite material was finally obtained.

### Embodiment 16

The difference from Embodiment 1 was that the temperature of the second sintering was 900 °C, and a silicon-carbon composite material was finally obtained.

### Embodiment 17

The difference from Embodiment 1 was that a mixture of hydrogen sulfide, methane and nitrogen with the volume ratio of 1:2:6 was introduced, and a silicon-carbon composite material was finally obtained.

### Embodiment 18

The difference from Embodiment 1 was that a mixture of hydrogen sulfide, methane and nitrogen with the volume ratio of 1:3:8 was introduced, and a silicon-carbon composite material was finally obtained.

### Embodiment 19

The difference from Embodiment 1 was that a mixture of hydrogen sulfide, methane and nitrogen with the volume ratio of 1:1:2 was introduced, and a silicon-carbon composite material was finally obtained.

### Embodiment 20

Ethyl diazoacetate (100g) and tetrabutyl titanate were mixed at the mass ratio of 2:1, and then ferric chloride with a molar weight of iron 3 times that of melamine was added and mixed for 1 h to obtain a first mixture (pink powder) that was uniformly mixed. The first mixture was transferred to a tubular electric furnace for a first sintering, the temperature was raised to 500 °C at a rate of 2 °C/min in an argon atmosphere and preserved for 2 h, and then the temperature was raised to 700 °C at a rate of 2 °C/min and preserved for 2 h. The first sintering was completed to obtain a carbon nanotube.

The carbon nanotube was soaked and washed in 150 mL of 10% hydrochloric acid solution for 24 h, filtered with a microporous filter membrane and washed with deionized water to neutral, and dried at 80 °C for 15 h. After drying, a black carbon nanotube was obtained. The carbon nanotube, sodium dodecylbenzene sulfonate and absolute ethanol were mixed according to the mass ratio of 1:1:50 and ultrasonically stirred for 6 h to obtain solution A. Methyl ethyl orthosilicate (1.5 times that of the molar weight of melamine) was added to solution A and ultrasonically stirred for 6 h continuously to obtain solution B.

Concentrated ammonia (28wt% mass) was mixed with 40 mL of anhydrous ethanol and 60 mL of deionized water according to the volume ratio of tetraethyl orthosilicate to concentrated ammonia water at 1:1 to form solution C. Solution B was added to solution C at a constant speed and stirred continuously, and hydrolyzed for 2 h with a pH value of 9. A hydrolyzed product was centrifuged and washed with absolute ethanol for 3 times to obtain an intermediate product.

The intermediate product was placed in an atmosphere rotary furnace, a mixture of hydrogen sulfide, methane and nitrogen with the volume ratio of 1:1:5 was introduced, the temperature was preserved at 1000 °C for 1 h, and a second sintering was performed to obtain a silicon-carbon composite material.

### Embodiment 21

Melamine (50 g) and tetrabutyl titanate were mixed at the mass ratio of 2:1, and then ferric chloride with a molar weight of iron 3 times that of melamine was added and mixed for 1 h to obtain a first mixture (pink powder) that was uniformly mixed. The first mixture was transferred to a tubular electric furnace for a first sintering, the temperature was raised to 500 °C at a rate of 2 °C/min in an argon atmosphere and preserved for 2 h, and then the temperature was raised to 700 °C at a rate of 2 °C/min and preserved for 2 h. The first sintering was completed to obtain a carbon nanotube.

The carbon nanotube was soaked and washed in 150 mL of 10% hydrochloric acid solution for 24 h, filtered with a microporous filter membrane and washed with deionized water to neutral, and dried at 80 °C for 15 h. After drying, a black carbon nanotube was obtained. The carbon nanotube, hexadecyltrimethyl ammonium bromide and absolute ethanol were mixed according to the mass ratio of 1:1:50 and ultrasonically stirred for 6 h to obtain solution A. Tetraethyl orthosilicate (1.5 times that of the molar weight of melamine) was added to solution A and ultrasonically stirred for 6 h continuously to obtain solution B.

Concentrated ammonia (28wt% mass) was mixed with 40 mL of anhydrous ethanol and 60 mL of deionized water according to the volume ratio of tetraethyl orthosilicate to concentrated ammonia water at 1:1 to form solution C. Solution B was added to solution C at a constant speed and stirred continuously, and hydrolyzed for 4 h with a pH value of 10. A hydrolyzed product was centrifuged and washed with absolute ethanol for 3 times to obtain an intermediate product.

The intermediate product was placed in an atmosphere rotary furnace, a mixture of hydrogen sulfide, methane and nitrogen with the volume ratio of 1:3:8 was introduced, the temperature was preserved at 1200 °C for 1 h, and a second sintering was performed to obtain a silicon-carbon composite material.

The silicon-carbon composite material of Embodiments 1 to 21 were mixed with superconducting carbon black and LA133 at the mass ratio of 8:1:1, mixed uniformly, coated on a copper foil, and dried in vacuum at 80 °C for 12 h to obtain an anode sheet. With metal lithium as an opposite electrode, Celgard2400 as a diaphragm, EC/DMC containing 1M LiPF₆ (volume ratio 1:1), and 10 wt% FEC additive solution as an electrolyte solution, 2016-type button batteries were assembled in an argon atmosphere glove box.

The electrochemical performance of the button batteries was tested. A discharge region was 0.05-1.5 V, a discharge current was 0.1 C (1 C=3580 mA/g), and a commercial SiO material (purchased from Aladdin-e.com) was used as a sample in Comparative Embodiment 1.

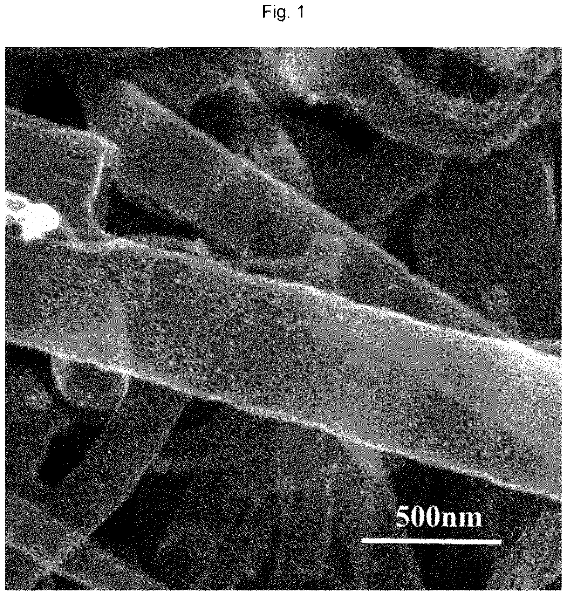

Fig. 1 is an SEM diagram of a silicon-carbon composite material in Embodiment 1. As could be seen from Fig. 1, the silicon-carbon composite material had an obvious tubular structure with a diameter of less than 500 nm.

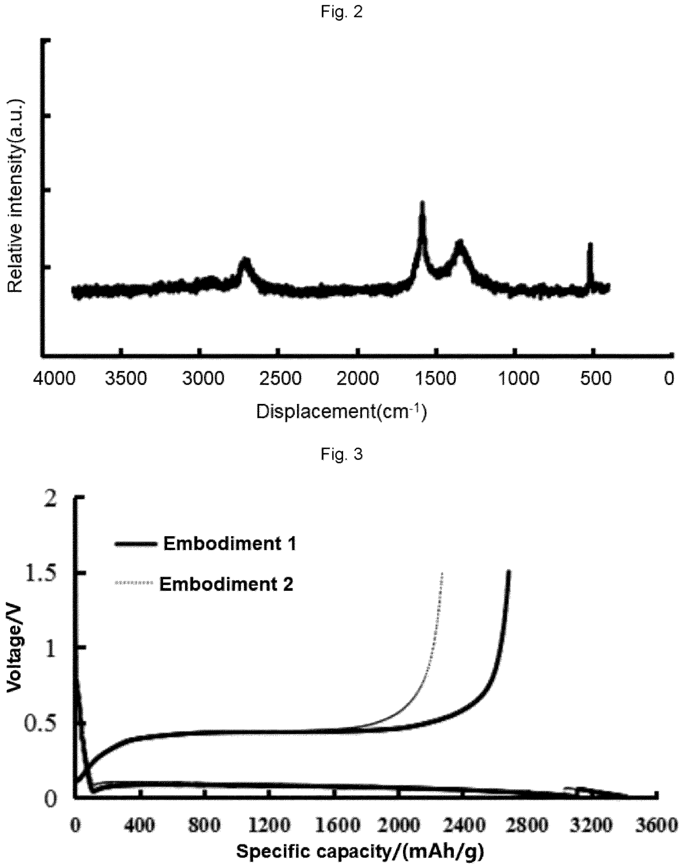

Fig. 2 is a Raman spectrogram of a silicon-carbon composite material in Embodiment 1. As could be seen from Fig. 2, the silicon-carbon composite material had characteristic peaks of silicon (500 cm⁻¹) and carbon (1300 cm⁻¹ and 1600 cm⁻¹), demonstrating that the product was a composite material of carbon and silicon.

The mass ratio (denoted as m) of the carbon nanotube, the SiOₓ coating layer and the carbon layer, and the mass ratio (denoted as n) of SiOₓ coating the inner surface of the matrix to SiOₓ coating the outer surface of the matrix in the silicon-carbon composite materials of Embodiments 1 to 21 were listed in Table 1.

**Table 1**

| Embodiment/Comparative Embodiment | m | n | Specific Charge Capacity mAh/g | Initial Effect/% | Capacity Retention Rate for 50 cycles/% |
|---|---|---|---|---|---|
| Embodiment 1 | 3:94.2:2.8 | 2:1 | 2685 | 78.69 | 97.8 |
| Embodiment 2 | 3:94.6:2.4 | 2:1 | 2274 | 69.86 | 98.4 |
| Embodiment 3 | 7:88.7:4.3 | 1.38:1 | 2207 | 77.42 | 96.3 |
| Embodiment 4 | 3:94.5:2.5 | 1.3:1 | 1905 | 65.46 | 98.6 |
| Embodiment 5 | 3:94.8:2.2 | 1.2:1 | 2712 | 78.58 | 97.2 |
| Embodiment 6 | 4:94.8:2.2 | 1.49:1 | 2623 | 78.32 | 97.1 |
| Embodiment 7 | 5:93.8:1.2 | 1.58:1 | 2575 | 78.18 | 93.1 |
| Embodiment 8 | 5:93.1:1.9 | 3.4:1 | 2552 | 78.10 | 92.5 |
| Embodiment 9 | 4:93.6:2.4 | 1.3:1 | 2592 | 78.58 | 97.4 |
| Embodiment 10 | 5:94:1 | 2.3:1 | 2626 | 79.21 | 95.2 |
| Embodiment 11 | 4:93.5:2.5 | 1.56:1 | 2403 | 78.08 | 98.1 |
| Embodiment 12 | 4:94:2 | 0.7:1 | 2489 | 77.73 | 92.4 |
| Embodiment 13 | 3:94.1:2.9 | 1.2:1 | 2318 | 77.59 | 95.4 |
| Embodiment 14 | 5:91.9:3.1 | 0.48:1 | 2809 | 82.56 | 90.5 |
| Embodiment 15 | 4:94:2 | 1.96:1 | 2645 | 78.12 | 96.5 |
| Embodiment 16 | 5:93.9:1.1 | 2.3:1 | 1843 | 65.54 | 98.9 |
| Embodiment 17 | 4:92.1:3.9 | 1.7:1 | 2321 | 73.88 | 98.4 |
| Embodiment 18 | 4:91.4:4.6 | 1.4:1 | 2267 | 70.54 | 98.5 |
| Embodiment 19 | 2:89.6:8.4 | 1.59:1 | 2765 | 85.85 | 88.7 |
| Embodiment 20 | 3:94.2:2.8 | 1.4:1 | 2620 | 78.43 | 97.4 |
| Embodiment 21 | 36:54:10 | 1.6:1 | 1790 | 78.72 | 97.9 |
| Comparative Embodiment 1 | - | - | 1630 | 75.34 | 82.5 |

The silicon-carbon composite materials of Embodiments 1 to 21 and the comparative samples were tested for nitrogen adsorption. According to the obtained nitrogen adsorption desorption curves, data on the specific surface area and total pore volume of the samples were summarized in Table 2, and the diameter and length of each sample were listed in Table 2.

**Table 2**

| Embodiment/Comparative Embodiment | Specific Surface Area/m²·g⁻¹ | Total Pore Volume/mL·g⁻¹ | Diameter/nm | Length/nm |
|---|---|---|---|---|
| Embodiment 1 | 91.21 | 0.45 | 400 | 3000 |
| Embodiment 2 | 68.72 | 0.22 | 500 | 3000 |
| Embodiment 3 | 80.45 | 0.31 | 200 | 1000 |
| Embodiment 4 | 92.43 | 0.45 | 500 | 2000 |
| Embodiment 5 | 30.32 | 0.25 | 250 | 500 |
| Embodiment 6 | 89.27 | 0.43 | 450 | 2500 |
| Embodiment 7 | 20.00 | 0.20 | 200 | 600 |
| Embodiment 8 | 100.00 | 0.50 | 500 | 3000 |
| Embodiment 9 | 65.42 | 0.32 | 300 | 2400 |
| Embodiment 10 | 99.41 | 0.50 | 500 | 3000 |
| Embodiment 11 | 74.34 | 0.30 | 400 | 2800 |
| Embodiment 12 | 32.98 | 0.21 | 380 | 2900 |
| Embodiment 13 | 68.45 | 0.29 | 400 | 3000 |
| Embodiment 14 | 99.74 | 0.44 | 420 | 2900 |
| Embodiment 15 | 65.54 | 0.23 | 400 | 2800 |
| Embodiment 16 | 100.00 | 0.49 | 390 | 3000 |
| Embodiment 17 | 58.34 | 0.21 | 380 | 2900 |
| Embodiment 18 | 43.58 | 0.28 | 360 | 2900 |
| Embodiment 19 | 20.37 | 0.20 | 360 | 2800 |
| Embodiment 20 | 43.95 | 0.26 | 210 | 1000 |
| Embodiment 21 | 56.24 | 0.32 | 260 | 1200 |
| Comparative Embodiment 1 | 15.42 | 0.06 | 0 | 0 |

As could be seen from Table 2, the silicon-carbon composite material provided by the present disclosure had a higher specific surface area and pore volume than the commercial SiO material.

The silicon-carbon composite material and commercial SiO in the embodiments were tested: silicon content was tested by X-ray fluorescence spectroscopy (XRF), oxygen content was tested by infrared absorption spectroscopy (oxygen element content analyzer), carbon content was tested by a carbon and sulfur analyzer, titanium content was tested by ICP, and nitrogen content was tested by XPS. The results were shown in Table 3.

**Table 3**

| Embodiment/Comparative Embodiment | Si Content | Oxygen Content | Carbon Content | Nitrogen Content | Titanium Content | Value of x in SiOx |
|---|---|---|---|---|---|---|
| Embodiment 1 | 70.1 | 24.1 | 3.2 | 1.6 | 1 | 0.601 |
| Embodiment 2 | 56.10 | 38.50 | 2.80 | 2.00 | 0.60 | 1.202 |
| Embodiment 3 | 70.0 | 24.1 | 3.5 | 1.2 | 1.2 | 0.799 |
| Embodiment 4 | 52.5 | 42.0 | 3.1 | 1.9 | 0.5 | 1.397 |
| Embodiment 5 | 70.4 | 24.4 | 3.4 | 0.8 | 1.0 | 0.606 |
| Embodiment 6 | 70.3 | 24.5 | 3.0 | 1.1 | 1.1 | 0.610 |
| Embodiment 7 | 69.5 | 24.3 | 3.2 | 0.9 | 2.1 | 0.612 |
| Embodiment 8 | 68.8 | 24.3 | 3 | 2.0 | 1.9 | 0.618 |
| Embodiment 9 | 69.5 | 24.1 | 3.8 | 1.6 | 1 | 0.607 |
| Embodiment 10 | 70.1 | 23.9 | 3.4 | 1.6 | 1 | 0.597 |
| Embodiment 11 | 69.1 | 24.4 | 3.80 | 1.7 | 1 | 0.618 |
| Embodiment 12 | 67.1 | 26.9 | 3.40 | 1.6 | 1 | 0.702 |
| Embodiment 13 | 65.4 | 28.7 | 3.80 | 1.3 | 0.8 | 0.768 |
| Embodiment 14 | 69.9 | 20.1 | 6.4 | 2 | 1.6 | 0.503 |
| Embodiment 15 | 69.5 | 24.5 | 3.60 | 1.6 | 0.8 | 0.617 |
| Embodiment 16 | 49.3 | 44.6 | 3.50 | 1.5 | 1.1 | 1.583 |
| Embodiment 17 | 58.0 | 34.1 | 5.80 | 1.3 | 0.8 | 1.029 |
| Embodiment 18 | 54.5 | 36.9 | 6.20 | 1.4 | 1.0 | 1.185 |
| Embodiment 19 | 67.4 | 14.5 | 16.5 | 1 | 0.6 | 0.376 |
| Embodiment 20 | 70.0 | 24.2 | 3.40 | 0.6 | 1.8 | 0.605 |
| Embodiment 21 | 30 | 24 | 42 | 2 | 2 | 0.600 |
| Comparative Embodiment 1 | 61.2 | 35.0 | 3.8 | 0 | 0 | 1 |

From the data in Tables 1-3, it could be found that based on the data of Embodiments 1 to 6, with the increase of the value of x in SiOₓ in the disclosure product, the capacity and initial effect of the silicon-carbon composite material generally showed a downward trend, and the cycle was increased, since the silicon-carbon composite material generated a large amount of lithium silicate by-products during charging and discharging, which reduced the expansion of the material. With the decrease of the value of x, the capacity and initial effect of the material generally showed an upward trend, and the cycle performance was reduced, since fewer by-products that could buffer the volume expansion of the material were generated. However, beyond the scope of the disclosure, the cycle performance of Embodiments 7 to 8 was significantly reduced.

The ratio of catalyst Fe to melamine in Embodiment 10 could lead to different diameters and lengths of the generated carbon nanotube, and large differences in the amount of SiOₓ contained, which would eventually lead to large expansion and poor cycle performance.

In Embodiment 12, the ratio of the carbon nanotube to the surfactant was out of range, resulting in easy agglomeration of the carbon nanotube and poor morphology of the synthetic material.

In Embodiment 14, if the ratio of tetraethyl orthosilicate to melamine was out of range, the capacity and initial effect of the material would be affected. For example, if the ratio was large, more SiOₓ would be deposited. Although the capacity after reduction was large, the expansion was large, which reduced the cycle performance of the material. If the ratio was low, the capacity would be low, and the cost performance would be low.

In Embodiment 16, the temperature of the second sintering was too high, the reaction was violent, x in SiOₓ was low, the expansion was large, the temperature was too low, the reaction was slow, and the initial effect was low. Therefore, it could not be directly applied to the battery material.

In Embodiment 19, the proportions of the reducing gas, the carbonaceous gas, and the buffer gas were out of range, and although the initial effect was improved, the cycle performance was slightly deteriorated.

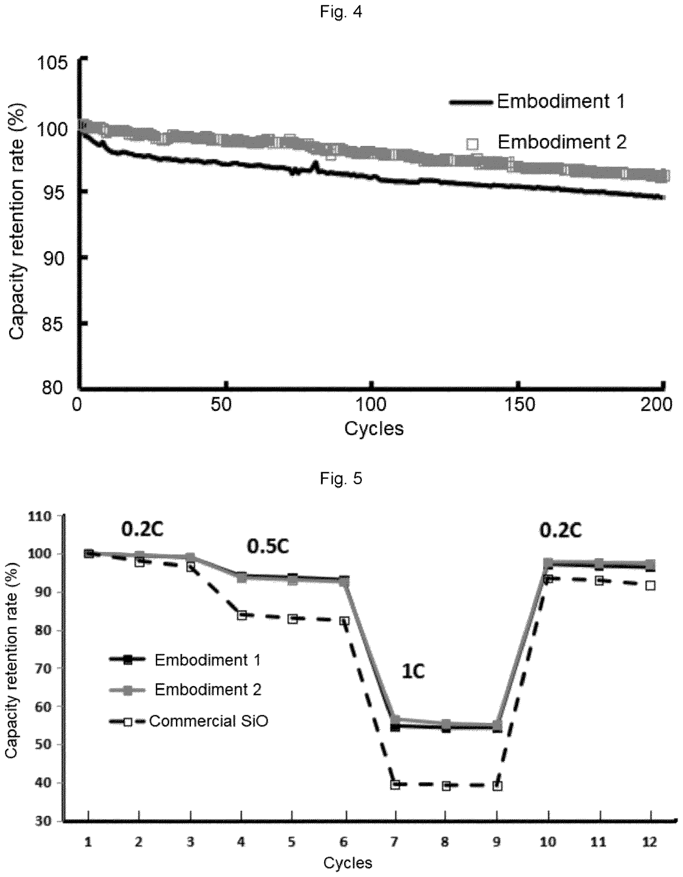

Fig. 3 is a deduction initial charge-discharge curve of a silicon-carbon composite material in Embodiment 1 and Embodiment 2. Fig. 4 is a cycle performance diagram of a silicon-carbon composite material in Embodiment 1 and Embodiment 2 under 0.1 C. As could be seen from Fig. 3 and Fig. 4, the silicon-carbon composite material of Embodiment 1 was powered down to 0.005 V (1 C=3580 mA/g) at a rate of 0.1 C, the initial discharge capacity reached 3412 mAh/g, the initial charge capacity was 2685 mAh/g, the initial Coulombic efficiency was 78.69%, and the capacity retention rate was 94.4% for 200 cycles. For the silicon-carbon composite material of Embodiment 2, the initial discharge capacity reached 3255 mAh/g, the initial charge capacity was 2274 mAh/g, the initial Coulombic efficiency was 69.86%, and the capacity retention rate was 96% for 200 cycles. The materials both showed good electrochemical properties and cycle stability.

The above results showed that since the lithium silicate compound formed by combining part of SiOₓ in the silicon-carbon composite material with lithium ions during charging and discharging could buffer the volume expansion of the material and maintain the cycle stability of the material, the cycle performance of the material was better. By comparison, it could be found that the cycle performance of the silicon-carbon composite material in Embodiment 2 was slightly better than that of the silicon-carbon composite material in Embodiment 1, but the initial charge capacity and initial effect of the sample in Embodiment 2 were lower than that of Embodiment 1, since the value of x (x=0.8) in SiOₓ in the silicon-carbon composite material prepared in Embodiment 2 was greater than that in Embodiment 1 (x=0.6). Therefore, slightly more lithium ions during the initial charge and discharge process were consumed in Embodiment 2, but more lithium silicate compounds were formed. Therefore, there was a certain difference in the initial electrical performance and cycle performance.

Fig. 5 is a rate performance diagram of a silicon-carbon composite material in Embodiment 1 and Embodiment 2 and commercial SiO. As could be seen from Fig. 5, the capacity retention rates of the silicon-carbon composite material of Embodiment 1 were 100%, 93.1%, 56.5%, and 97.5% at the rates of 0.2 C, 0.5 C, 1C, and 0.2 C, respectively. The capacity retention rates of the silicon-carbon composite material of Embodiment 2 were 100%, 93.7%, 54.3%, and 96.8% at the rates of 0.2 C, 0.5 C, 1C, and 0.2 C, respectively. The capacity retention rates of commercial SiO were 100%, 81.1%, 39.2%, and 93.0% at the rates of 0.2 C, 0.5 C, 1C, and 0.2 C, respectively. By comparison, it could be found that the rate performances of the samples in Embodiment 1 and Embodiment 2 were basically the same, and the slight difference was mainly caused by different content of x in SiOₓ in the prepared silicon-carbon composite materials. As the value of x increased, the rate performance was reduced. However, the rate performance was better than that of the commercial SiO material due to the existence of co-doping of the carbon nanotube, titanium and nitrogen in the silicon-carbon composite material. The introduction of these elements greatly improved the electronic conductivity of the material and reduced polarization. Therefore, the rate performance of the material had been greatly improved.

From the above description, it can be seen that the above embodiments of the present disclosure achieve the following technical effects.

In one aspect, the matrix of the present disclosure has a multi-layered and large-cavity structure and has high porosity of the carbon nanotube, thereby contributing to the doping modification of titanium and nitrogen therein. After the joint doping of titanium and nitrogen, electrical properties such as conductivity are greatly improved, thereby significantly reducing the polarization of the silicon-carbon composite material. In another aspect, the silicon oxide layer coating the outer surface and the inner surface of the matrix may be anchored by forming chemical bonds such as N-O-Si and Ti-O-Si with nitrogen and titanium doped into the carbon nanotube, thereby further stabilizing the structure of the silicon-carbon composite material, alleviating the volume expansion of a silicon oxide material, and improving the cycle stability of the silicon-carbon composite material. The carbon nanotube in the silicon-carbon composite material can not only effectively maintain the structural stability thereof during the process of intercalation and de-intercalation of lithium ions, but also provide lithium-ion transport channels and electrolyte solution storage space. Furthermore, a lithium silicate phase formed by silicon oxide during charging and discharging can reduce the volume expansion of the material, and can also effectively control the capacity, initial effect and cycle performance of the material. The lithium-ion battery prepared using the silicon-carbon composite material provided by the present disclosure has the advantages of high specific discharge capacity, stable cycle performance, good rate performance, and the like.

The above descriptions are only preferred embodiments of the present disclosure and are not intended to limit the present disclosure. It will be apparent to those skilled in the art that various modifications and variations can be made in the present disclosure. Any modifications, equivalent replacements, improvements, and the like that come within the spirit and principles of the present disclosure are intended to be within the protection scope of the present disclosure.

## Claims

1. A silicon-carbon composite material, the silicon-carbon composite material comprising:
a matrix, the matrix being a carbon nanotube doped with titanium and nitrogen and having an outer surface and an inner surface; and
a coating layer, coating the outer surface and the inner surface, the coating layer comprising a silicon oxide layer.

2. The silicon-carbon composite material according to claim 1, wherein the coating layer further comprises a carbon layer, the silicon oxide layer coats the inner surface and the outer surface of the matrix, and the carbon layer coats a surface of the silicon oxide layer away from a tube wall of the carbon nanotube.

3. The silicon-carbon composite material according to claim 2, wherein the silicon oxide layer is a SiOₓ coating layer; 0.3≤x≤1.4, preferably 0.6≤x≤1.4; and the mass ratio of the matrix, the SiOₓ coating layer and the carbon layer is preferably 2-36:54-95:1-10, and the mass ratio of SiOₓ coating the inner surface of the matrix to SiOₓ coating the outer surface of the matrix is preferably 1.2-2:1.

4. The silicon-carbon composite material according to claim 3, wherein the silicon-carbon composite material contains, by mass percentage, 30-70.5% of silicon, 0.5-2% of titanium, 0.5-2% of nitrogen, and the rest of carbon, silicon and oxygen; the silicon and the oxygen exist in the form of SiOₓ; and the silicon-carbon composite material preferably has a specific surface area of 20-100 m²·g⁻¹, the silicon-carbon composite material preferably has a total pore volume of 0.2-0.5 mL·g⁻¹, the silicon-carbon composite material preferably has a diameter of 200-500 nm, and the silicon-carbon composite material preferably has a length of 100-3000 nm, further preferably 500-3000 nm.

5. A preparation method of a silicon-carbon composite material, the preparation method comprising:
S1: performing a first sintering on a first mixture comprising a carbon-containing nitrogen source, a titanium source and a transition metal salt in nitrogen or inert gas to obtain a carbon nanotube; and
S2: hydrolyzing a second mixture comprising the carbon nanotube and a silicon source under alkaline conditions to obtain a silicon-carbon composite material.

6. The preparation method according to claim 5, the preparation method further comprising:
hydrolyzing the second mixture to obtain the intermediate product; and
performing a second sintering on the intermediate product in a carbon-containing reducing atmosphere to obtain the silicon-carbon composite material, wherein
the second mixture preferably further comprises a surfactant, the mass ratio of the carbon nanotube to the surfactant is preferably 1:1-2, and the surfactant is preferably selected from any one or more of hexadecyltrimethyl ammonium bromide, sodium dodecylbenzene sulfonate and sodium stearate;
the hydrolysis reaction preferably has a pH value of 9-12, and the time of the hydrolysis reaction is preferably 2-4 h;
the molar ratio of the silicon source to the carbon-containing nitrogen source is preferably 1-2:1, preferably, 1.5-2:1, and the silicon source is preferably selected from any one or more of tetraethyl orthosilicate, methyl orthosilicate and methyl ethyl orthosilicate;
the temperature of the second sintering is preferably 1000-1300 °C, and the time of the second sintering is preferably 1-3 h; and
the carbon-containing reducing atmosphere preferably comprises a carbon-containing gas and a reducing gas, the carbon-containing gas is methane, and the reducing gas is preferably selected from any one or more of carbon monoxide, hydrogen sulfide and sulfur dioxide; the volume ratio of the reducing gas in the carbon-containing reducing atmosphere is preferably 7-15%, the carbon-containing reducing atmosphere preferably further comprises nitrogen or inert gas, and the volume ratio of the reducing gas, the carbon-containing gas and the nitrogen gas is preferably 1:1-3:5-8.

7. The preparation method according to claim 6, wherein the second sintering is performed in a rotary kiln, and the rotary kiln preferably has a revolving speed of 0.1-1 r/min.

8. The preparation method according to claim 5 or 6, wherein in S1,
the mass ratio of the carbon-containing nitrogen source to the titanium source is 1-3:1, the nitrogen source is preferably selected from any one or more of melamine, diazomethane and diazoethyl acetate, and the titanium source is preferably selected from any one or more of tetrabutyl titanate, tetraethyl titanate and tetraisopropyl titanate;
the molar ratio of metal in the transition metal salt to the carbon-containing nitrogen source is preferably 1:0.3-1, metal in the transition metal salt is preferably selected from any one or more of cobalt, iron and nickel, and an anion of the transition metal salt is preferably selected from acetate and/or halogen ions;
the temperature of the first sintering is preferably 400-900 °C, the time of the first sintering is preferably 4-12 h, the first sintering is preferably a gradient sintering, and the gradient sintering process comprises:
performing a first gradient sintering on the first mixture to obtain a first gradient sintering product; and
performing a second gradient sintering on the first gradient sintering product to obtain the carbon nanotube, wherein
the temperature of the first gradient sintering is preferably 400 to 600 °C, and the time of the first gradient sintering is preferably 2-6 h;
the temperature of the second gradient sintering is preferably 700 to 900 °C, and the time of the second gradient sintering is preferably 2-6 h; and
the inert gas is selected from any one or more of helium, neon, argon and krypton.

9. An anode, comprising an anode material, wherein the anode material comprises the silicon-carbon composite material according to any one of claims 1 to 4.

10. A lithium-ion battery, comprising a cathode and an anode, wherein the anode is the anode according to claim 9.
